# EUROPEAN PATENT APPLICATION

(11) **EP 4 459 758 A1**
(43) Date of publication of application: **06.11.2024**
(21) Application number: 21969835.4
(22) Date of filing: 31.12.2021
(51) Int. Cl.: H01M 50/152, H01M 50/166, H01M 50/342

(54) **BATTERY AND ELECTRIC DEVICE**

(71) Applicant: Dongguan Amperex Technology Limited, Dongguan, Guangdong 523808 (CN)
(72) Inventor: QIU, Shenzhao, Dongguan City, Guangdong Province, 523000 (CN); TIAN, Jing, Dongguan City, Guangdong Province, 523000 (CN)
(74) Representative: Icosa
(86) International application number: PCT/CN2021/143997
(87) International publication number: WO 2023/123492

(57) **Abstract**

This application provides a battery and an electrical device. The battery includes a housing, an electrode assembly, a first current collecting plate, and an explosion-proof valve. The housing includes a body portion and a top cover assembly connected to the body portion. The body portion includes a bottom wall at an end away from the top cover assembly. The electrode assembly is disposed in the housing. The electrode assembly includes a first electrode plate, a second electrode plate, and a separator layer located between the first electrode plate and the second electrode plate. The first electrode plate includes a first blank foil region uncoated with an active material. The first current collecting plate is disposed in the housing. One side of the first current collecting plate is electrically connected to the first blank foil region. The explosion-proof valve is disposed on the bottom wall. The explosion-proof valve includes a flipping fin. The flipping fin is connected to one side, away from the first blank foil region, of the first current collecting plate. The flipping fin is configured to be flippable with respect to the first current collecting plate so as to disconnect the flipping fin from the first current collecting plate.

## Description

### TECHNICAL FIELD

This application relates to the technical field of batteries, and in particular, to a battery and an electrical device.

### BACKGROUND

Cylindrical batteries have been widely used in passenger vehicles, logistics vehicles, and other fields by virtue of a high energy density and cost-effectiveness. Currently, a pressure relief safety mechanism is typically disposed in a mature cylindrical battery. In a case that an abnormal temperature and a gas pressure rise is caused by a short circuit in the cylindrical battery, when the gas pressure rises to an alert value, the pressure relief safety mechanism can expel the gas inside the cylindrical battery to prevent the cylindrical battery from exploding due to the high pressure.

However, existing pressure relief safety mechanisms are integrated with a top cover assembly of the battery through a jaw structure. The pressure relief mechanism with such a jaw structure occupies much space of the battery, and impairs the energy density of the battery.

### SUMMARY

An objective of this application is to provide a battery to improve safety of the battery and increase the energy density of the battery. Specific technical solutions are as follows:
An embodiment of this application provides a battery. The battery includes a housing, an electrode assembly, a first current collecting plate, and an explosion-proof valve. The housing includes a body portion and a top cover assembly connected to the body portion. The body portion includes a bottom wall at an end away from the top cover assembly. The electrode assembly is disposed in the housing. The electrode assembly includes a first electrode plate, a second electrode plate, and a separator layer located between the first electrode plate and the second electrode plate. The first electrode plate includes a first blank foil region uncoated with an active material. The first current collecting plate is disposed in the housing. One side of the first current collecting plate is electrically connected to the first blank foil region. The explosion-proof valve is disposed on the bottom wall. The explosion-proof valve includes a flipping fin. The flipping fin is connected to one side, away from the first blank foil region, of the first current collecting plate. The flipping fin is configured to be flippable with respect to the first current collecting plate so as to disconnect the flipping fin from the first current collecting plate.

In the battery provided in this embodiment of this application, the explosion-proof valve is disposed on the bottom wall of the housing. When the electrode assembly is short-circuited in the battery and results in thermal runaway, a large amount of gas produced, or other phenomena, the flipping fin of the explosion-proof valve flips over outward with respect to the first current collecting plate under the action of a pressure difference between the inside and outside. When flipping over, the flipping fin is detached from the first current collecting plate and is electrically disconnected from the first current collecting plate. In this case, the path formed by the electrode assembly, the first current collecting plate, the explosion-proof valve, and the housing of the battery is cut off, and the battery stops outputting a current outward. In this way, the battery is prevented from continuing to be short-circuited and continuously generating gas, thereby reducing the safety hazards of thermal runaway of the battery caused by excessive pressure, and improving the safety of the battery. With the explosion-proof valve disposed on the bottom wall of the battery, it is not necessary to dispose a pressure relief safety mechanism such as a jaw structure at the top cover assembly of the battery, thereby saving space inside the battery, and increasing the energy density of the battery. Moreover, when the flipping fin flips over due to the pressure difference between the inside and outside, the first current collecting plate is disconnected from the bottom wall at the same time as the first current collecting plate is disconnected from the flipping fin, thereby cutting off the current between the electrode assembly and the housing, and eliminating the need to dispose a current interrupt device on the top cover assembly as is the case in the related art. Therefore, the above arrangement improves the space utilization rate in the height direction of the battery, and in turn, further increases the energy density of the battery in the height direction of the battery.

In some embodiments of this application, the first current collecting plate includes a first region connected to the flipping fin. A first nick is created on one side, close to the electrode assembly, of the first current collecting plate. Along a first direction perpendicular to the bottom wall, a projection of the first nick at least partially falls within a projection of the first region. The first nick can reduce the mechanical strength at the first nick on the first current collecting plate. In this way, when the flipping fin flips over, it is easier to snap off the junction between the first current collecting plate and the flipping fin to disconnect the first current collecting plate from the flipping fin, thereby further improving the safety of the battery.

In some embodiments of this application, a first recess is created on the first current collecting plate on one side close to the electrode assembly. The first nick is located inside the first recess. One side, away from the first current collecting plate, of the first recess is connected to the flipping fin. The first recess can make the thickness at the first recess on the first current collecting plate smaller than the thickness of the remaining region other than the first recess on the first current collecting plate. On the basis of creating the first nick, positioning the first nick inside the first recess can further reduce the strength of connection between the first current collecting plate and the flipping fin, and further improve the safety of the battery.

In some embodiments of this application, a second nick is created on one side, away from the electrode assembly, of the flipping fin. The second nick can reduce the mechanical strength of the flipping fin at the second nick, and cause the flipping fin to break off quickly at the second nick, thereby further improving the safety of the battery.

In some embodiments of this application, the second nick is arc-shaped. The arc shape is free from pointed corners and is relatively smooth, thereby reducing the probability of interfering or colliding with other regions of the bottom wall when the flipping fin flips over.

In some embodiments of this application, the housing includes a centerline extending along the first direction perpendicular to the bottom wall. Viewed along the first direction, the first current collecting plate includes at least one second recess recessed toward the centerline. The second recess allows rapid infiltration and penetration of the electrolyte solution into the electrode assembly.

In some embodiments of this application, the battery further includes a first insulation spacer. The first insulation spacer is a ring structure with a hollow region inside. Along the first direction, the first insulation spacer is disposed between the first current collecting plate and the explosion-proof valve. Viewed along the first direction, the flipping fin is located inside the hollow region of the first insulation spacer. The first insulation spacer may be configured to isolate the bottom wall from the remaining region other than the region connected to the first current collecting plate on the electrode assembly. In this way, after the first current collecting plate is disconnected from the flipping fin, the first current collecting plate and the electrode assembly are fully disconnected from the bottom wall.

In some embodiments of this application, an injection hole is created on both the bottom wall and the first insulation spacer. The injection hole on the bottom wall communicates with the injection hole on the first insulation spacer. The battery further includes a sealing element. The sealing element is detachably disposed inside the injection hole. The injection holes can increase the speed at which the electrolyte solution enters the electrode assembly. After completion of injecting the electrolyte solution, the injection hole can be sealed by the sealing element to avoid leakage of the battery.

In some embodiments of this application, along the first direction, a projection of the injection hole lies inside a projection of the at least one second recess. This reduces the probability of the first current collecting plate in obstructing the injection hole, facilitates the electrolyte solution to quickly enter the electrode assembly through the injection hole and the second recess, and improves the efficiency of electrolyte injection.

In some embodiments of this application, an elastic connecting portion is disposed on the first current collecting plate. Along a second direction perpendicular to the first direction, the connecting portion is located between the first recess of the first current collecting plate and the housing. Along the first direction, the connecting portion abuts against one side, close to the electrode assembly, of the first insulation spacer. The connecting portion serves functions of cushioning and shock resistance, and effectively reduces the risk of a loose weld.

In some embodiments of this application, the bottom wall and the explosion-proof valve are formed in one piece. The one-piece formation can reduce cumbersome bottom cover assembling steps, improve production reliability, and avoid battery leakage caused by poor sealing.

In some embodiments of this application, the second electrode plate includes a second blank foil region uncoated with an active material. The top cover assembly includes a second current collecting plate. The second current collecting plate is electrically connected to the second blank foil region.

In some embodiments of this application, the top cover assembly further includes an electrode post structure and a top cover. The electrode post structure is connected to one side, away from the second electrode plate, of the second current collecting plate. The top cover is connected to one side, away from the second current collecting plate, of the electrode post structure. The electrode post structure is configured to lead a positive or negative current out of the electrode assembly through the second current collecting plate.

In some embodiments of this application, the top cover assembly further includes an adhesive-sealant layer and a second insulation spacer. The adhesive-sealant layer is located between the electrode post structure and the top cover. The electrode post structure is connected to the top cover by the adhesive-sealant layer. The second insulation spacer is a ring structure with a hollow region inside. The second insulation spacer is disposed on one side, away from the top cover, of the second current collecting plate. Viewed along a first direction perpendicular to the bottom wall, the electrode post structure is located inside the hollow region of the second insulation spacer. The second insulation spacer may be configured to isolate the top cover assembly from the remaining region other than the region connected to the second current collecting plate on the electrode assembly.

In some embodiments of this application, the electrode assembly assumes an axially wound jelly-roll structure or a stacked structure.

According to a second aspect of this application, an electrical device is provided. The electrical device includes the battery disclosed in any one of the foregoing embodiments.

The technical solutions provided in this application bring at least the following beneficial effects:

In the technical solutions provided in some embodiments of this application, when the electrode assembly is short-circuited in the battery and results in thermal runaway, a large amount of gas produced, or other phenomena, the flipping fin of the explosion-proof valve flips over outward under the action of a pressure difference between the inside and outside. When flipping over, the flipping fin is detached from the first current collecting plate and is electrically disconnected from the first current collecting plate. In this case, the path formed by the electrode assembly, the first current collecting plate, the explosion-proof valve, and the housing of the battery is cut off, and the battery stops outputting a current outward. In this way, the battery is prevented from continuing to be short-circuited and continuously generating gas, thereby reducing the safety hazards of thermal runaway of the battery caused by excessive pressure, and improving the safety of the battery. With the explosion-proof valve disposed on the bottom wall of the battery, it is not necessary to dispose a pressure relief safety mechanism such as a jaw structure at the top cover assembly of the battery, thereby saving space inside the battery, and increasing the energy density of the battery. Moreover, when the flipping fin flips over due to the pressure difference between the inside and outside, the first current collecting plate is disconnected from the bottom wall at the same time as the first current collecting plate is disconnected from the flipping fin, thereby cutting off the current between the electrode assembly and the housing, and eliminating the need to dispose a current interrupt device on the top cover assembly as is the case in the related art. Therefore, the above arrangement improves the space utilization rate in the height direction of the battery, and in turn, further increases the energy density of the battery in the height direction of the battery.

### BRIEF DESCRIPTION OF DRAWINGS

To describe the technical solutions of some embodiments of this application or the related art more clearly, the following outlines the drawings to be used in some embodiments of this application or the related art. Evidently, the drawings outlined below are merely about some embodiments of this application, and a person of ordinary skill in the art may derive other embodiments from the drawings without making any creative effort.
FIG. 1 is a schematic exploded view of a battery according to an embodiment of this application;
FIG. 2 is a schematic structural diagram of a first current collecting plate in the battery shown in FIG. 1;
FIG. 3 is a cross-sectional view of a battery according to an embodiment of this application;
FIG. 4 is a close-up view of a structure of a part I shown FIG. 3;
FIG. 5 is a close-up view of another structure of a part I shown in FIG. 3;
FIG. 6 is a schematic structural diagram of a flipped flipping fin shown in FIG. 5;
FIG. 7 is a schematic structural diagram of a flipped and fractured flipping fin shown in FIG. 6; and
FIG. 8 is another schematic exploded view of a battery according to an embodiment of this application.

### List of reference numerals:

1 housing, 11-body portion, 111-bottom wall, 12-explosion-proof valve, 121-flipping fin, 1211-second nick, 123-injection hole, 124 -sealing element, 13-top cover assembly, 131-second current collecting plate, 132-electrode post structure, 133-top cover, 134-adhesive-sealant layer, 135-second insulation spacer;
2-electrode assembly;
3-first current collecting plate, 31-first nick, 32-first recess, 33-boss, 34-second recess, 35-connecting portion;
4-first insulation spacer;
5-exhaust passage.

### DETAILED DESCRIPTION OF EMBODIMENTS

To describe the technical solutions in some embodiments of this application more clearly, the following outlines the drawings used in some embodiments of this application. Evidently, the drawings outlined below are merely a part of embodiments of this application. A person of ordinary skill in the art may derive other drawings from the outlined drawings without making any creative efforts.

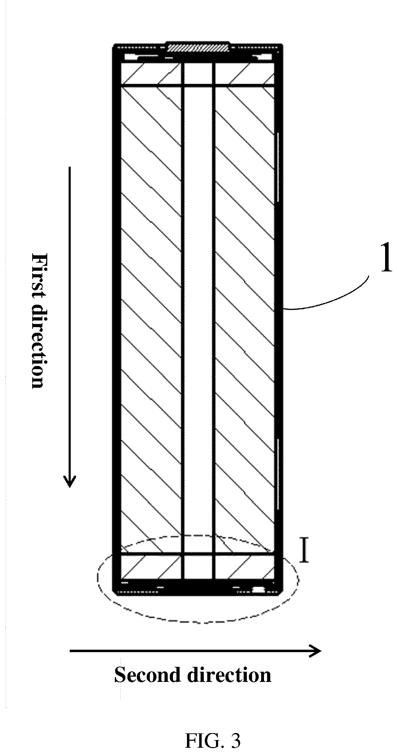

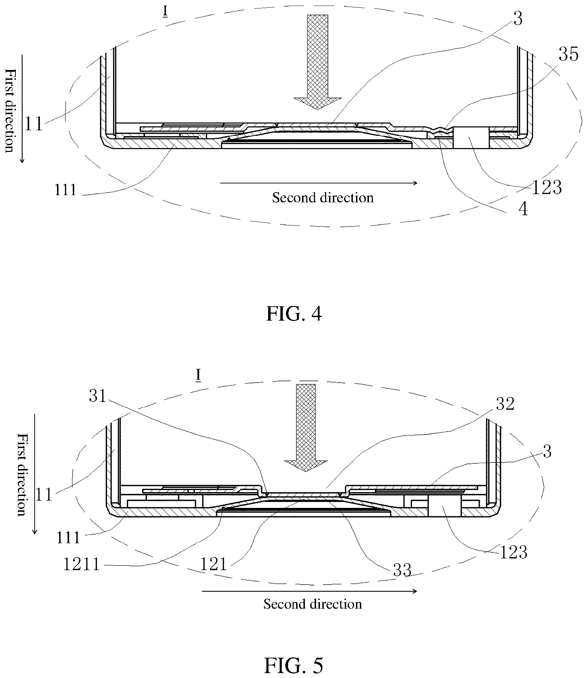

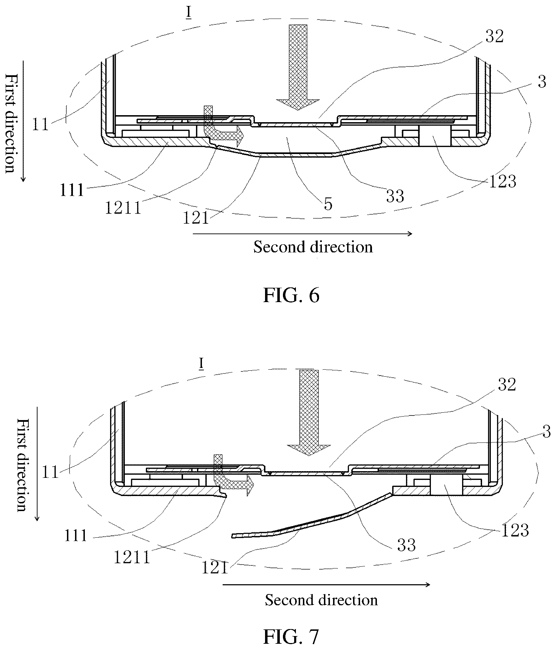

To improve the safety of a battery, some embodiments of this application provide a battery. The following describes in detail the battery according to this application with reference to drawings. The battery includes, but is not limited to, a cylindrical battery, a prismatic battery, or the like. FIG. 5 to FIG. 7 are close-up views of a part I of a battery shown in FIG. 3, in which the direction indicated by the arrow is a flow direction of the gas generated by thermal runaway inside the battery.

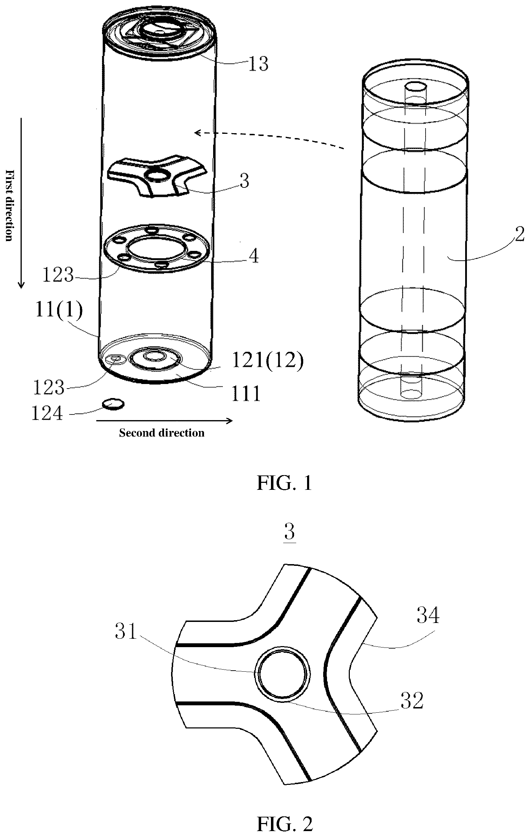

As shown in FIG. 1 to FIG. 7, an embodiment of this application provides a battery. The battery includes a housing 1, an electrode assembly 2, a first current collecting plate 3, and an explosion-proof valve 12.

The housing 1 includes a body portion 11 and a top cover assembly 13 connected to the body portion 11. The body portion 11 includes a bottom wall 111 at an end away from the top cover assembly.

The electrode assembly 2 is disposed in the housing 1. The electrode assembly 2 includes a first electrode plate, a second electrode plate, and a separator layer located between the first electrode plate and the second electrode plate. The first electrode plate includes a first blank foil region uncoated with an active material.

The first current collecting plate 3 is disposed in the housing 1. One side of the first current collecting plate 3 is electrically connected to the first blank foil region.

The explosion-proof valve 12 is disposed on the bottom wall 111. The explosion-proof valve includes a flipping fin 121. The flipping fin 121 is connected to one side, away from the first blank foil region, of the first current collecting plate 3. The flipping fin 121 is configured to be flippable with respect to the first current collecting plate 3 so as to disconnect the flipping fin 121 from the first current collecting plate 3.

The housing 1 may be a metal housing. The housing 1 may be made of metal aluminum, copper, or another good conductor. In addition, because aluminum possesses advantages such as a low density, a preferable material of the housing 1 may be aluminum or aluminum alloy.

The first electrode plate may be a positive electrode plate or a negative electrode plate, and the second electrode plate may be a negative electrode plate or a positive electrode plate. The polarity of the first electrode plate is opposite to that of the second electrode plate. The separator layer may be configured to isolate the positive electrode plate from the negative electrode plate to implement electronic insulation, and may also be configured to ensure free passage of ions in the electrolyte solution to form an electrical circuit. The first electrode plate includes a first blank foil region uncoated with an active material layer. The first blank foil region may be a region of a specified width located on one side of the first electrode plate along the width direction, where the side is close to the bottom wall 111. The first blank foil region extends along a length direction of the first electrode plate. The first current collecting plate 3 is electrically connected to the first blank foil region. To be specific, a tab is formed by kneading or otherwise processing the first blank foil region, and then the tab is electrically connected to the first current collecting plate 3 by welding or other means.

In the technical solution provided in this embodiment of this application, as shown in FIG. 3, FIG. 5, and FIG. 6, the explosion-proof valve 12 is disposed on the bottom wall 111 of the housing 1. When the electrode assembly 2 is short-circuited in the battery and results in thermal runaway, a large amount of gas produced, or other phenomena, the flipping fin 121 of the explosion-proof valve 12 flips over outward with respect to the first current collecting plate 3 under the action of a pressure difference between the inside and outside. When flipping over, the flipping fin 121 is detached from the first current collecting plate 3 and is electrically disconnected from the first current collecting plate 3, thereby reducing the safety hazards of thermal runaway caused by a high pressure in the battery, and improving the safety of the battery. With the explosion-proof valve 12 disposed on the bottom wall 111 of the battery, it is not necessary to dispose a pressure relief safety mechanism such as a jaw structure at the top cover assembly of the battery, thereby saving space inside the battery, and increasing the energy density of the battery. Moreover, when the flipping fin 121 flips over due to the pressure difference between the inside and outside, the first current collecting plate 3 is disconnected from the bottom wall 111 at the same time as the first current collecting plate 3 is disconnected from the flipping fin 121, thereby cutting off the current between the electrode assembly 2 and the housing 1, and eliminating the need to dispose a current interrupt device on the top cover assembly 13 as is the case in the related art. Therefore, the above arrangement improves the space utilization rate in the height direction of the battery, and in turn, increases the energy density of the battery in the height direction of the battery.

In addition, after the flipping fin 121 is disconnected from the first current collecting plate 3, the path formed by the electrode assembly 2, the first current collecting plate 3, the explosion-proof valve 12, and the housing 1 of the battery is cut off, and the battery stops outputting a current outward. In this way, the battery is prevented from continuing to be short-circuited and continuously generating gas, thereby eliminating the safety hazards of thermal runaway of the battery caused by excessive pressure. Moreover, the explosion-proof valve 12 is detached from the first current collecting plate 3 to form an exhaust passage 5 capable of accommodating a specified volume of gas generated inside the battery and cushioning the internal expansion force generated by the short circuit of the electrode assembly 2. As can be seen, the safety of the battery can be improved by this technical solution.

In some embodiments of this application, as shown in FIG. 2, the first current collecting plate 3 includes a first region connected to the flipping fin 121. A first nick 31 is created on one side, close to the electrode assembly 2, of the first current collecting plate 3. Along a first direction perpendicular to the bottom wall 111, a projection of the first nick 31 at least partially falls within the first region.

In some embodiments of this application, the first direction may be a height direction of the battery. That the projection of the first nick 31 at least partially falls within the first region along the first direction means that at least a part of the structure of the first nick 31 is disposed at the junction between the first current collecting plate 3 and the flipping fin 121. Further, the projection of the first nick 31 fully falls within the projection of the first region along the first direction. The first nick 31 created on the junction between the first current collecting plate 3 and the flipping fin 121 can reduce the mechanical strength at the first nick 31 on the first current collecting plate 3. In this way, when the flipping fin 121 flips over, it is easier to snap off the junction between the first current collecting plate 3 and the flipping fin 121 to disconnect the first current collecting plate 3 from the flipping fin 121, thereby further improving the safety of the battery. Specifically, when the first current collecting plate 3 is welded to the flipping fin 121 by laser or other means, the first nick 31 makes it easier to snap off the weld joint between the first current collecting plate 3 and the flipping fin 121.

In some embodiments of this application, as shown in FIG. 2, a first recess 32 is created on the first current collecting plate 3 on one side close to the electrode assembly 2. The first nick 31 is located inside the first recess 32. One side, away from the first current collecting plate 3, of the first recess 32 is connected to the flipping fin 121.

In these embodiments of this application, the first recess 32 is created on the first current collecting plate 3. When viewed along a direction from the top cover assembly 13 to the bottom wall 111, the first recess 32 is recessed toward the explosion-proof valve 12. The first recess 32 created on the first current collecting plate 3 can make the thickness at the first recess 32 on the first current collecting plate 3 smaller than the thickness of the remaining region other than the first recess 32 on the first current collecting plate 3. On the basis of creating the first nick 31, positioning the first nick 31 inside the first recess 32 can further reduce the strength of connection between the first current collecting plate 3 and the flipping fin 121, and it is easier to snap off the junction between the first current collecting plate 3 and the flipping fin 121 when the flipping fin 121 flips over, thereby further improving the safety of the battery.

Further, the first recess 32 may include a groove or the like. The first recess 32 may be formed by stamping the first current collecting plate 3 through a stamping process. Correspondingly, when viewed along a direction from the bottom wall 111 to the top cover assembly 13, the first recess 32 is a boss 33 protruding toward the explosion-proof valve 12. The side, away from the electrode assembly 2, of the first recess 32 is connected to the flipping fin 121, which means that a top surface, close to the explosion-proof valve 12, of the boss 33 is connected to the flipping fin 121. The boss 33 provides a connection platform for the first current collecting plate 3, and facilitates the connection between the first current collecting plate 3 and the flipping fin 121. Specifically, when the first current collecting plate 3 is welded to the flipping fin 121 by laser or other means, the disposed boss 33 holds the flipping fin 121, and facilitates welding between the first current collecting plate 3 and the flipping fin 121.

In some embodiments of this application, as shown in FIG. 5 to FIG. 7, a second nick 1211 is created on one side, away from the electrode assembly 2, of the flipping fin 121.

The second nick 1211 created on the flipping fin 121 in these embodiments of this application can reduce the mechanical strength of the flipping fin 121 at the second nick 1211. When the flipping fin 121 flips over and is detached from the first current collecting plate 3, the flipping fin 121 can break off quickly at the second nick 1211, thereby promptly releasing the gas generated inside the battery, relieving the internal expansion force generated by a short circuit of the electrode assembly 2, and in turn, further improving the safety of the battery.

In some embodiments of this application, the second nick 1211 is arc-shaped. In this way, when the flipping fin 121 breaks off at the second nick 1211 as impacted by the internal pressure of the battery, the break point takes on a smooth arc shape free from pointed corners, thereby reducing the probability of interfering or colliding with other regions of the bottom wall 111 when the flipping fin 121 flips over. Further, the second nick 1211 may be in the shape of a semicircle. Even further, the second nick 1211 may be in the shape of a major arc, that is, the angle corresponding to the second nick 1211 may be greater than 180 degrees.

In some embodiments of this application, the housing 1 includes a centerline extending along the first direction perpendicular to the bottom wall 111. Viewed along the first direction, the first current collecting plate 3 includes at least one second recess 34 recessed toward the centerline.

In some embodiments of this application, when the battery is a cylindrical battery, the housing 1 is cylindrical, and the centerline L is the axis of the housing 1. The second recess 34 created on the first current collecting plate 3 can serve as a seepage hole. The second recess 34 allows rapid infiltration and penetration of the electrolyte solution into the electrode assembly 2. The number of the second recesses 34 may be plural. For example, three second recesses 34 may be created in FIG. 2. The size of the second recess 34 is not particularly limited herein, and may be flexibly set as required in practical applications.

In some embodiments of this application, as shown in FIG. 1, the battery further includes a first insulation spacer 4. The first insulation spacer 4 is a ring structure with a hollow region inside. Along the first direction, the first insulation spacer 4 is disposed between the first current collecting plate 3 and the explosion-proof valve 12. Viewed along the first direction, the flipping fin 121 is located inside the hollow region of the first insulation spacer 4.

In some embodiments of this application, the first insulation spacer 4 may be an elastic structure. The first insulation spacer 4 is disposed between the first current collecting plate 3 and the explosion-proof valve 12, and the first insulation spacer 4 may abut above the explosion-proof valve 12 to support the electrode assembly 2, thereby reducing the risk of a loose weld at the weld joint caused by frequent vibration of the battery under different working conditions. Moreover, the flipping fin 121 is placed in the hollow region in the first insulation spacer 4, so that the flipping fin 121 can be welded to the first current collecting plate 3. In addition, the bottom wall 111 can be electrically connected to the first current collecting plate 3 only by the flipping fin 121 located in between. In other words, the first insulation spacer 4 may be configured to isolate the bottom wall 111 from the remaining region other than the region connected to the first current collecting plate 3 on the electrode assembly 1. In this way, after the first current collecting plate 3 is disconnected from the flipping fin 121, the first current collecting plate 3 and the electrode assembly 2 are fully disconnected from the bottom wall 111.

In some embodiments of this application, the flipping fin 121 may be directly integrated on the bottom wall 111, thereby facilitating the connection between the flipping fin 121 and the bottom wall 111 and reducing the process complexity. In addition, as shown in FIG. 1, the flipping fin 121 may be connected to the bottom wall 111 by a connecting component such as a connecting strip.

In some embodiments of this application, an injection hole 123 is created on both the bottom wall 111 and the first insulation spacer 4. The injection hole 123 on the bottom wall 4 communicates with the injection hole 123 on the first insulation spacer 4. The battery further includes a sealing element 124, and the sealing element 124 is detachably disposed inside the injection hole 123.

In some embodiments of this application, the injection hole 123 on the bottom wall 111 and the injection hole 123 on the first insulation spacer 4 may be a one-piece structure. Further, as shown in FIG. 1, the injection hole 123 is created in a region other than the flipping fin 121 on the bottom wall 111. The injection holes 123 created on the bottom wall 111 and the first insulation spacer 4 can increase the speed of the electrolyte solution entering the electrode assembly 2. After completion of injecting the electrolyte solution, the injection hole 123 can be sealed by the sealing element 124 to avoid leakage of the battery.

In some embodiments of this application, along the first direction, the projection of the injection hole 123 lies inside the projection of the at least one second recess 34, thereby reducing the probability of the first current collecting plate 3 in obstructing the injection hole 123, facilitating the electrolyte solution to quickly enter the electrode assembly 2 through the injection hole 123 and the second recess 34, and improving the efficiency of electrolyte injection.

In some embodiments of this application, as shown in FIG. 4, an elastic connecting portion 35 is disposed on the first current collecting plate 3. Along a second direction perpendicular to the first direction, the connecting portion 35 is located between the first recess of the first current collecting plate 3 and the housing 1. Along the first direction, the connecting portion 35 abuts against one side, close to the electrode assembly 2, of the first insulation spacer 4.

In some embodiments of this application, the second direction may be a thickness direction of the battery. As shown in FIG. 4 and FIG. 5, the connecting portion may be W-shaped or a structure with a wavy cross-section or another shape, so as to make the connecting portion 35 more resilient. Referring to FIG. 4, the connecting portion 35 abuts above the elastic insulation spacer 4. When the battery vibrates, the connecting portion 35 serves functions of cushioning and shock resistance, and effectively reduces the risk of a loose weld. The connecting portion 35 may be processed by stamping.

In some embodiments of this application, the bottom wall 111 and the explosion-proof valve 12 are formed in one piece.

In these embodiments of this application, the explosion-proof valve 12 and the bottom wall 111 are formed in one piece so that the formed housing 1 includes the explosion-proof valve 12. One-piece formation may be implemented by one-piece stamping and other processing means. The one-piece formation can reduce cumbersome bottom cover assembling steps, improve production reliability, and avoid battery leakage caused by poor sealing.

In some embodiments of this application, the second electrode plate includes a second blank foil region uncoated with an active material. The top cover assembly 13 includes a second current collecting plate 131. The second current collecting plate 131 is electrically connected to the second blank foil region.

The second blank foil region in some embodiments of this application may be a region of a specified width located on one side of the second electrode plate along the width direction, where the side is away from the bottom wall 111. The second blank foil region extends along a length direction of the second electrode plate. The second current collecting plate 131 is electrically connected to the second blank foil region. To be specific, a tab is formed by kneading or otherwise processing the second blank foil region, and then the tab is electrically connected to the second current collecting plate 131 by welding or other means.

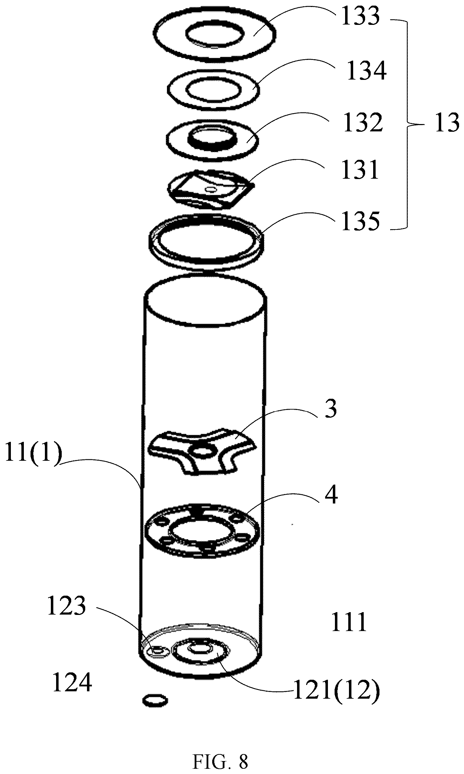

In some embodiments of this application, as shown in FIG. 8, the top cover assembly 13 further includes an electrode post structure 132 and a top cover 133. The electrode post structure 132 is connected to one side, away from the second electrode plate, of the second current collecting plate 131. The top cover 133 is connected to one side, away from the second current collecting plate 131, of the electrode post structure 132.

In some embodiments of this application, one side of the electrode post structure 132 is configured to be electrically connected to the second current collecting plate 131, and the other side of the electrode post structure is connected to the top cover 133 and extends out of the housing 1, so as to lead a positive or negative current out of the electrode assembly 2 through the second current collecting plate 131. Further, a through-hole corresponding to the electrode post structure 132 may be created on the top cover 133, so that the electrode post structure 132 can extend out of the housing 1 through the through-hole. The electrode post structure may be made of copper, nickel, or a nickel-plated copper material.

In some embodiments, as shown in FIG. 8, the top cover assembly 13 further includes an adhesive-sealant layer 134 and a second insulation spacer 135. The adhesive-sealant layer 134 is located between the electrode post structure 132 and the top cover 133. The electrode post structure 132 is connected to the top cover 133 by the adhesive-sealant layer 134. The second insulation spacer 135 is a ring structure with a hollow region inside. The second insulation spacer 135 is disposed on one side, away from the top cover 133, of the second current collecting plate 131. Viewed along a first direction, the electrode post structure 132 is located inside the hollow region of the second insulation spacer 135.

In some embodiments of this application, the adhesive-sealant layer 134 is configured to connect the electrode post structure 132 and the top cover 133. Further, the method of connection between the top cover 133, the adhesive-sealant layer 134, and the electrode post structure 132 may be thermal bonding. In other words, the adhesive-sealant layer 134 is heated to exhibit adhesive properties and connect the top cover 133 and the electrode post structure 132, thereby reducing the process complexity. The adhesive-sealant layer 134 is further configured to exert a sealing effect between the electrode post structure 132 and the top cover 133. The adhesive-sealant layer 134 may be made of one or more of composite materials such as polypropylene (PP), polyethylene (PE), or polystyrene (PS). The top cover 133 may be made of aluminum, aluminum alloy, or the like.

The electrode post structure 132 is placed in the hollow region of the second insulation spacer 135, so that the electrode post structure 132 can be welded to the second current collecting plate 131, and the remaining region other than the electrode post structure 132 on the top cover assembly 13 is obstructed by the second insulation spacer 135 from being electrically connected to the second current collecting plate 131. In other words, the second insulation spacer 135 may be configured to isolate the top cover assembly 13 from the remaining region other than the region connected to the second current collecting plate 135 on the electrode assembly 1.

A second aspect of this application provides an electrical device. The electrical device includes the battery disclosed in any one of the embodiments in the first aspect.

In an embodiment of this application, the battery is configured to supply power to the electrical device. The electrical device may be, but is not limited to, a laptop computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household storage battery, lithium-ion capacitor, or the like.

In the battery contained in the electrical device according to an embodiment of this application, the explosion-proof valve 12 is disposed on the bottom wall 111 of the housing 1. When the electrode assembly 2 is short-circuited in the battery and results in thermal runaway, a large amount of gas produced, or other phenomena, the flipping fin 121 of the explosion-proof valve 12 flips over outward with respect to the first current collecting plate 3 under the action of a pressure difference between the inside and outside. When flipping over, the flipping fin 121 is detached from the first current collecting plate 3 and is electrically disconnected from the first current collecting plate 3, thereby reducing the safety hazards of thermal runaway caused by a high pressure in the battery, and improving the safety of the battery. With the explosion-proof valve 12 disposed on the bottom wall 111 of the battery, it is not necessary to dispose a pressure relief safety mechanism such as a jaw structure at the top cover assembly of the battery, thereby saving space inside the battery, and increasing the energy density of the battery. Moreover, when the flipping fin 121 flips over due to the pressure difference between the inside and outside, the first current collecting plate 3 is disconnected from the bottom wall 111 at the same time as the first current collecting plate 3 is disconnected from the flipping fin 121, thereby cutting off the current between the electrode assembly 2 and the housing 1, and eliminating the need to dispose a current interrupt device on the top cover assembly 13 as is the case in the related art. Therefore, the above arrangement improves the space utilization rate in the height direction of the battery, and in turn, increases the energy density of the battery in the height direction of the battery.

Finally, it is hereby noted that the foregoing embodiments are merely intended to describe the technical solutions of this application but not to limit this application. Although this application has been described in detail with reference to the foregoing embodiments, a person of ordinary skill in the art understands that modifications may still be made to the technical solutions described in the foregoing embodiments, or equivalent replacements may still be made to some or all technical features in the technical solutions. Such modifications and equivalent replacements fall within the scope of the claims and specification hereof without making the essence of the corresponding technical solutions depart from the scope of the technical solutions of the embodiments of this application. Particularly, to the extent that no structural conflict exists, various technical features mentioned in different embodiments may be combined in any manner. This application is not limited to the specific embodiments disclosed herein, but includes all technical solutions falling within the scope of the claims.

## Claims

1. A battery, comprising:
a housing, wherein the housing comprises a body portion and a top cover assembly connected to the body portion, and the body portion comprises a bottom wall at an end away from the top cover assembly;
an electrode assembly, wherein the electrode assembly is disposed in the housing, the electrode assembly comprises a first electrode plate, a second electrode plate, and a separator layer located between the first electrode plate and the second electrode plate, and the first electrode plate comprises a first blank foil region uncoated with an active material;
a first current collecting plate, wherein the first current collecting plate is disposed in the housing, and one side of the first current collecting plate is electrically connected to the first blank foil region; and
an explosion-proof valve, wherein the explosion-proof valve is disposed on the bottom wall, the explosion-proof valve comprises a flipping fin, the flipping fin is connected to one side, away from the first blank foil region, of the first current collecting plate, and the flipping fin is configured to be flippable with respect to the first current collecting plate so as to disconnect the flipping fin from the first current collecting plate.

2. The battery according to claim 1, wherein the first current collecting plate comprises a first region connected to the flipping fin, a first nick is created on one side, close to the electrode assembly, of the first current collecting plate, and, along a first direction perpendicular to the bottom wall, a projection of the first nick at least partially falls within a projection of the first region.

3. The battery according to claim 2, wherein a first recess is created on the first current collecting plate on one side close to the electrode assembly, the first nick is located inside the first recess, and one side, away from the electrode assembly, of the first recess is connected to the flipping fin.

4. The battery according to claim 3, wherein a second nick is created on one side, away from the electrode assembly, of the flipping fin.

5. The battery according to claim 4, wherein the second nick is arc-shaped.

6. The battery according to claim 5, wherein the housing comprises a centerline extending along the first direction perpendicular to the bottom wall, and, viewed along the first direction, the first current collecting plate comprises at least one second recess recessed toward the centerline.

7. The battery according to claim 6, wherein the battery further comprises a first insulation spacer, and the first insulation spacer is a ring structure with a hollow region inside; along the first direction, the first insulation spacer is disposed between the first current collecting plate and the explosion-proof valve; and, viewed along the first direction, the flipping fin is located inside the hollow region of the first insulation spacer.

8. The battery according to claim 7, wherein an injection hole is created on both the bottom wall and the first insulation spacer, and the injection hole on the bottom wall communicates with the injection hole on the first insulation spacer; and
the battery further comprises a sealing element, and the sealing element is detachably disposed inside the injection hole.

9. The battery according to claim 8, wherein, along the first direction, a projection of the injection hole lies inside a projection of the at least one second recess.

10. The battery according to claim 7, wherein an elastic connecting portion is disposed on the first current collecting plate; along a second direction perpendicular to the first direction, the connecting portion is located between the first recess of the first current collecting plate and the housing; and, along the first direction, the connecting portion abuts against one side, close to the electrode assembly, of the first insulation spacer.

11. The battery according to claim 1, wherein the bottom wall and the explosion-proof valve are formed in one piece.

12. The battery according to claim 1, wherein the second electrode plate comprises a second blank foil region uncoated with an active material; and
the top cover assembly comprises a second current collecting plate, the second current collecting plate is electrically connected to the second blank foil region.

13. The battery according to claim 12, wherein the top cover assembly further comprises:
an electrode post structure, wherein the electrode post structure is connected to one side, away from the second electrode plate, of the second current collecting plate; and
a top cover, wherein the top cover is connected to one side, away from the second current collecting plate, of the electrode post structure.

14. The battery according to claim 13, wherein the top cover assembly further comprises:
an adhesive-sealant layer, wherein the adhesive-sealant layer is located between the electrode post structure and the top cover, and the electrode post structure is connected to the top cover by the adhesive-sealant layer; and
a second insulation spacer, wherein the second insulation spacer is a ring structure with a hollow region inside; the second insulation spacer is disposed on one side, away from the top cover, of the second current collecting plate; and, viewed along a first direction perpendicular to the bottom wall, the electrode post structure is located inside the hollow region of the second insulation spacer.

15. The battery according to any one of claims 1 to 14, wherein the electrode assembly assumes an axially wound jelly-roll structure or a stacked structure.

16. An electrical device, wherein the electrical device comprises the battery according to any one of claims 1 to 15.
